# FASCICULE DE BREVET EUROPEEN

(11) **EP 2 718 954 B1**
(45) Date de publication et mention de la délivrance du brevet: **16.11.2016**
(21) Numéro de dépôt: 12731109.0
(22) Date de dépôt: 04.06.2012
(51) Int. Cl.: H01J 9/50, H01J 9/52, G02F 1/13

(54) **PROCEDE DE DECONSTRUCTION AU MOINS PARTIELLE D'UN ECRAN PLAT DE VISUALISATION**
VERFAHREN ZUR MINDESTENS TEILWEISEN ZERLEGUNG EINES FLACHBILDSCHIRMS
METHOD FOR AT LEAST PARTIALLY DECONSTRUCTING A FLAT DISPLAY SCREEN

(30) Priorité: 09.06.2011 FR 1155032
(43) Date de publication de la demande: 16.04.2014
(73) Titulaire: Veolia Propreté, 92000 Nanterre (FR)
(72) Inventeur: SANGLIER, Christophe, F-95100 Argenteuil (FR); BODEVIN, Eric, F-49600 La Chaussaire (FR); DOYEN, Olivier, F-92000 Nanterre (FR); FERNANDES, Paulo, F-95180 Menucourt (FR)
(74) Mandataire: Novagraaf Technologies
(86) Numéro de dépôt international: PCT/FR2012/051245
(87) Numéro de publication internationale: WO 2012/168638

(56) Documents cités:
- WO-A1-2007/122728
- CN-A- 101 209 453
- FR-A1- 2 943 263
- JP-A- 2007 161 550

## Description

La présente invention concerne la déconstruction, c'est-à-dire le démantèlement, d'écrans plats.

Elle s'applique à tout type d'écran plat, qu'il s'agisse d'écrans possédant une dalle à cristaux liquides (LCD pour *Liquid Crystal Display*) et lampes de rétro-éclairage (CCFL, LED ou autre) ou d'autres types d'écrans tels que :
- Plasma
- OLED (Diode Electroluminescente Organique)
- SED (*Surface-conduction Electron-emitter Display*)
- FED (*Field Emission Display*)
- OEL (*Organic Electroluminescent*)
- PLED (diodes électroluminescentes à polymère
- PHOLED (*Phosphorescent Organic Light-Emitting Diode)*

Pour détruire ou dépolluer ces écrans plats en fin de vie, il existe des procédés industriels de broyage, au moins partiel, de ces écrans au cours desquels la dalle et/ou les lampes de rétro-éclairage sont en général détruits ou partiellement endommagés. Les documents CN 101 209 453 et FR 2 943 263 décrivent ces procédés.

Dès lors, de tels procédés peuvent entraîner la libération de gaz et de substances toxiques, tels que le mercure par exemple, dans l'air, sur le sol, ou directement au contact des constituants de l'écran susceptibles d'être recyclés. Or le mercure qui se libère a tendance à polluer les autres éléments de l'écran, par exemple le plastique qui devient alors difficilement recyclable. Ces procédés sont donc responsables d'une certaine pollution et augmentent de façon substantielle la difficulté de récupération de constituants valorisables, notamment les cristaux liquides, et de métaux, notamment l'indium, de l'écran.

A l'heure actuelle, les solutions existantes consistent soit à broyer l'écran et aspirer les éléments gazeux toxiques, soit à démanteler l'écran entièrement manuellement, ce qui n'est pas satisfaisant en termes de respect de l'environnement, et en termes de productivité.

La présente invention a pour but de remédier à ces inconvénients en proposant une solution visant à conserver l'intégrité de la dalle d'un écran plat autant que possible.

Plus précisément, selon un premier de ses objets, l'invention concerne un procédé de déconstruction au moins partielle d'un écran plat de visualisation, l'écran comprenant :
- une dalle, sensiblement plane, comprenant quatre bords latéraux et une partie apparente sur une face avant de l'écran, destinée à la visualisation d'images, et
- un châssis, sertissant la dalle en recouvrant partiellement au moins la face avant et deux bords latéraux,
le procédé comprenant des étapes consistant à :
- disposer un écran unitaire sur un dispositif de maintien, et
- brider l'écran unitaire sur le dispositif de maintien.
Selon l'invention, le procédé est essentiellement caractérisé en ce qu'il comprend en outre une étape consistant à :
- effectuer une déformation plastique du châssis, tout en maintenant l'intégrité de la dalle.

Grâce à cette caractéristique, il est possible d'éviter la découpe du châssis. Ce qui permet l'ouverture d'un écran en s'affranchissant de techniques industrielles agressives et génératrices de déchets (en particulier non valorisables). En particulier, la découpe entraine :
- de nombreuses vibrations dans l'écran (pouvant amener à la casse d'éléments fragiles telles que les lampes à mercure),
- génère de nombreuses poussières, gaz et copeaux, et
- induit des consommables (un outil de découpe a une durée de vie limitée).

Dans un mode de réalisation, le procédé comprend en outre une étape de fragilisation du châssis par action mécanique et/ou thermique sur le châssis.

Ce qui permet de limiter les efforts à appliquer pour déformer le châssis.

De préférence, l'étape de fragilisation n'est mise en oeuvre que sur tout ou partie de la partie du châssis recouvrant partiellement la face avant de l'écran.

Dans un mode de réalisation, au moins deux des quatre coins de l'écran sont bridés, la déformation plastique étant effectuée sur un coin non bridé.

Dans un mode de réalisation, le procédé comprend en outre une étape de détermination des dimensions et de la position dans l'espace de la dalle apparente.

Ce qui permet d'asservir ensuite les efforts à appliquer aux dimensions déterminées.

Dans un mode de réalisation, le procédé comprend en outre une étape de profilométrie laser consistant à obtenir la topographie tridimensionnelle d'une partie au moins de l'écran.

Ce qui permet un repérage optique de l'écran, c'est-à-dire une analyse de forme de celui-ci.

Dans un mode de réalisation, le procédé comprend en outre une étape consistant à retirer la dalle du châssis.

Selon un autre de ses objets, l'invention concerne un dispositif de maintien d'un écran plat de visualisation pour la déconstruction au moins partielle de celui-ci, le dispositif comprenant :
un système de bridage comprenant :
   - un support, sur lequel un écran est susceptible d'être positionné,
   - un ensemble de branches indépendantes montées sur le support,
   - une bride positionnée à l'extrémité de chaque branche.

De préférence, chaque bride est montée rotative par rapport à la branche qui la supporte, selon un axe de rotation perpendiculaire au plan du support ; et/ou chaque branche est montée rotative par rapport au support, selon un axe de rotation perpendiculaire au plan du support.

Avantageusement, chaque branche est télescopique.

L'invention est avantageusement compatible avec tous les écrans, quel que soit leur état (neuf ou usagé), leur taille (dimensions de la dalle), leur poids et leur(s) matériau(x) de fabrication.

Selon un autre de ses objets, l'invention concerne un système pour la déconstruction au moins partielle d'un écran plat de visualisation, le système comprenant
- un dispositif de maintien selon l'invention,
- éventuellement un écran positionné dans le dispositif de maintien, et
- un dispositif de déformation plastique susceptible d'être mis en mouvement relatif par rapport à l'écran de manière à exercer un effort mécanique sur le châssis pour le déformer selon au moins l'une des trajectoires suivantes :

une trajectoire rectiligne parallèle au plan de la dalle, une trajectoire rectiligne non parallèle au plan de la dalle, une trajectoire courbe, ou une combinaison de ces mouvements.

De préférence, le dispositif de déformation plastique comprend
- un couteau et
- un moyen éventuellement rotatif de transmission d'un effort, relié au couteau,
le couteau comprenant une forme permettant de concentrer les contraintes à appliquer au châssis.

Avantageusement, le couteau présente un bord d'attaque configuré pour passer entre la dalle et le châssis.

Le couteau peut présenter un bord d'attaque possédant un angle d'ouverture variable sur la profondeur du couteau.

On peut prévoir en outre une caméra pour visualiser sur le pupitre d'un opérateur le déroulement de l'application des efforts de déformation plastique.

Grâce à l'invention, il est possible d'écarter au moins un coté d'un écran en déformant le châssis de celui-ci, ce qui permet le retrait de la dalle et des éventuels filtres / diffuseurs, ainsi que l'accès aux éventuelles lampes de rétro éclairage.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 illustre un mode de réalisation du procédé selon l'invention, où les étapes optionnelles sont en pointillés,
- la figure 2A illustre une vue de face avant d'un écran plat,
- la figure 2B illustre une vue de face avant d'un écran plat, avec des zones circulaires illustrant les zones préférentielles de fragilisation du châssis,
- la figure 3 illustre un écran plat maintenu dans un mode de réalisation d'un dispositif de maintien selon l'invention, en vue de trois-quarts,
- la figure 4A illustre un mode de réalisation d'un couteau selon l'invention en vue de dessus,

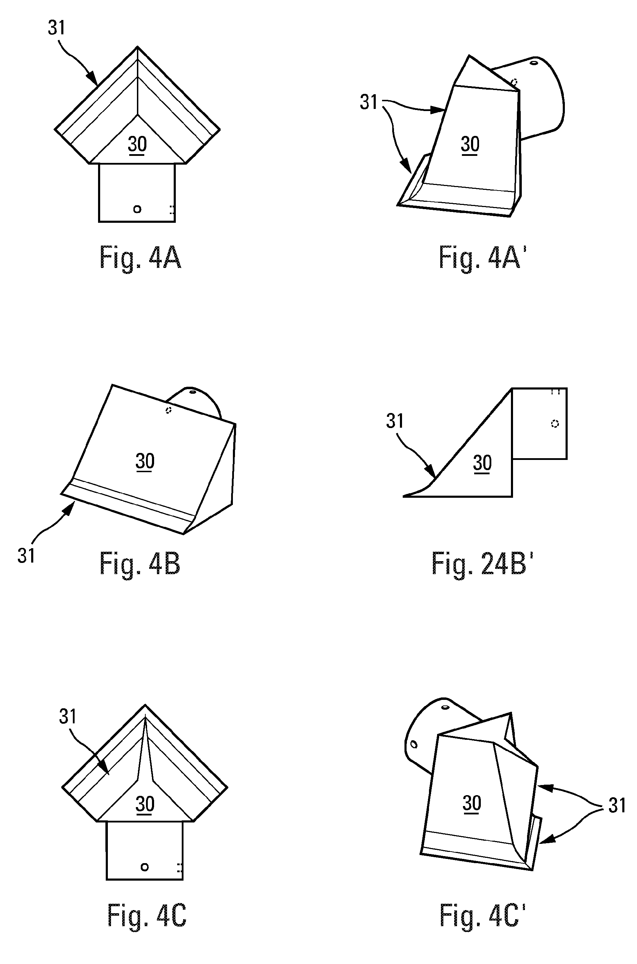

- la figure 4A' illustre le couteau de la figure 4A en vue de profil,
- la figure 4B illustre un mode de réalisation d'un couteau selon l'invention en vue de trois-quarts,
- la figure 4B' illustre le couteau de la figure 4B en vue de profil,
- la figure 4C illustre un mode de réalisation d'un couteau selon l'invention en vue de dessus,
- la figure 4C' illustre le couteau de la figure 4C en vue de trois-quarts,

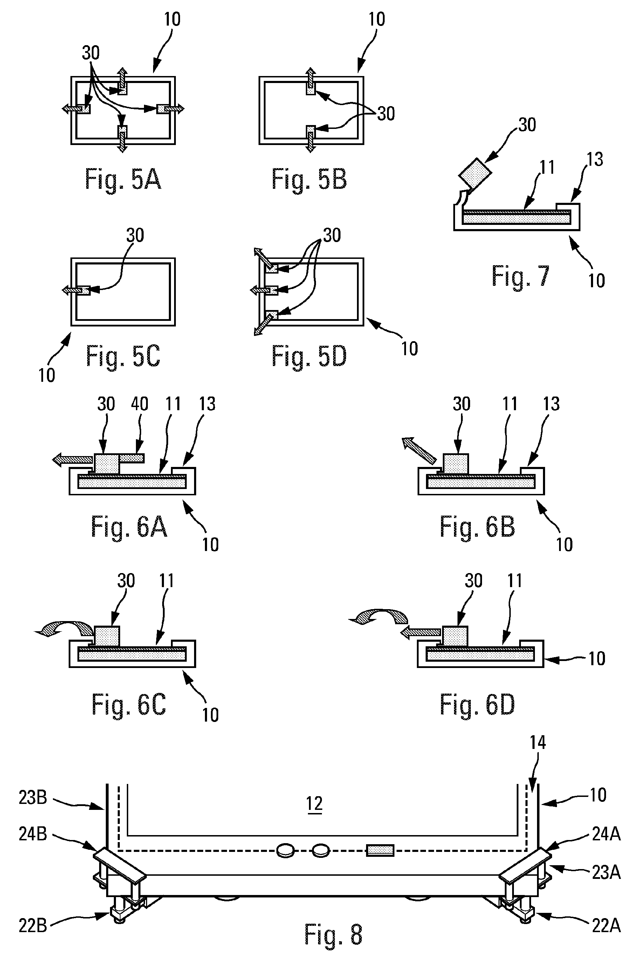

- les figures 5A à 5D illustrent en vue de dessus, par des flèches pleines, différents mouvements de couteaux pour la déformation du châssis d'un écran avec un couteau (figure 5C), deux couteaux (figure 5B), trois couteaux (figure 5D), et quatre couteaux (figure 5A),
- les figures 6A à 6D illustrent en coupe transversale, par des flèches pleines, différents mouvements de translation et/ou rotation pour un couteau, appliqué sur le châssis, l'enveloppe n'étant pas représentée,
- la figure 7 illustre en coupe transversale le résultat d'une déformation plastique par un couteau sur le châssis d'un écran plat, dans lequel l'enveloppe n'est pas représentée,
- la figure 8 illustre en vue sensiblement de dessus le bridage d'un écran dans un mode de réalisation d'un dispositif de maintien selon l'invention, dans lequel les brides ne couvrent pas la dalle, les pointillés illustrant les limites de la dalle cachées par l'enveloppe,

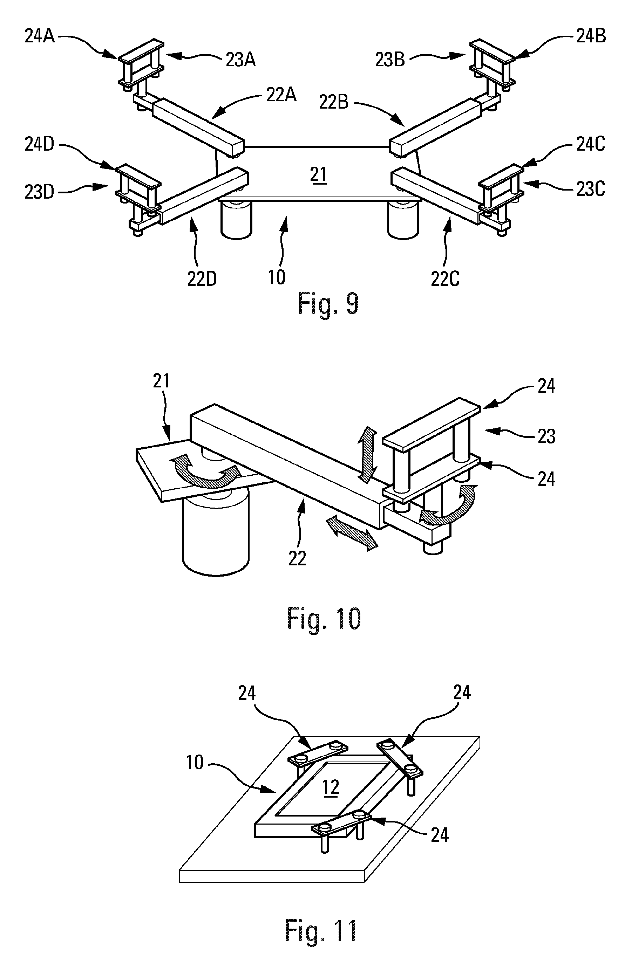

- la figure 9 illustre un mode de réalisation d'un dispositif de maintien selon l'invention,
- la figure 10 illustre par des flèches pleines les mouvements de translation et de rotation possibles pour un bras d'un mode de réalisation d'un dispositif de maintien selon l'invention, et
- la figure 11 illustre le maintien d'un écran sur un support selon un autre mode de réalisation d'un dispositif de maintien selon l'invention.

De nos jours, il existe des écrans plats dans de nombreux domaines : des moniteurs d'ordinateurs, téléviseurs, tablettes tactiles, dispositifs de navigation, etc. Pour des raisons environnementales, il est souhaitable que tous les écrans plats soient déconstruits en fin de vie, afin de permettre le traitement de leurs composants, en particulier leur valorisation.

Tous les écrans plats comprennent une dalle, qui permet la visualisation sur la face avant de l'écran.

Par dalle 11 ou matrice, on entend la partie généralement rectangulaire d'un écran 10 plat sur laquelle se forme l'image. Pour un écran 10 LCD, les éléments polluants sont les cristaux liquides enfermés entre deux fines plaques de verre et permettant la formation de l'image.

Certains écrans plats comprennent des lampes de rétro-éclairage, placées derrière la dalle 11 par rapport à la visualisation. Certaines lampes peuvent contenir également des éléments polluants (mercure par exemple).

La dalle 11 est enserrée dans un châssis 13.

Le châssis 13 est généralement métallique et exerce une fonction de maintien d'éléments constitutifs de l'écran, notamment la dalle.

La dalle 11 et le châssis 13 sont logés dans une enveloppe 14.

L'enveloppe 14 est généralement en plastique, de forme globalement parallélépipédique et exerce une fonction globalement esthétique visant à cacher les éléments de structure comme le châssis 13 et/ou les éventuels joints, connecteurs, etc. qui seraient apparents autrement. Elle recouvre également la face arrière de l'écran.

La résistance mécanique du châssis 13 étant supérieure à celle de l'enveloppe 14, la déformation plastique visée ici concerne celle du châssis, toute déformation plastique du châssis 13 entrainant celle de l'enveloppe 14.

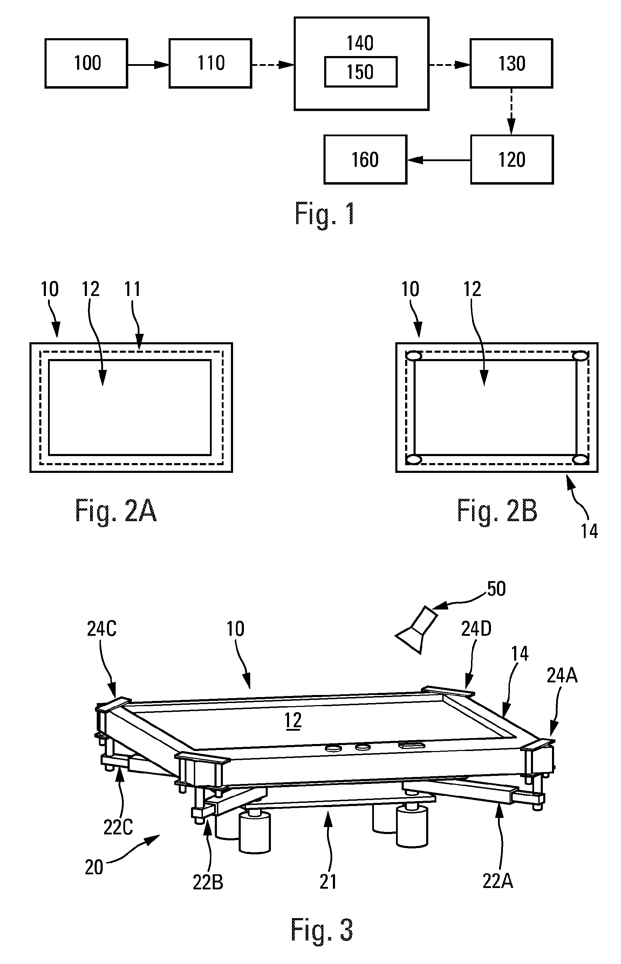

L'enveloppe 14 présente une ouverture (fenêtre) sensiblement rectangulaire dont les dimensions sont légèrement inférieures aux dimensions de la surface de la dalle, de sorte que la dalle 11 présente une partie visible, nommée « dalle apparente 12 » (figure 2A), et une partie cachée sous l'enveloppe. L'enveloppe 14 enserre la dalle 11 par recouvrement des bords de celle-ci de façon solidaire.

Pour le traitement des écrans plats, en vue de leur valorisation, il est important de conserver l'intégrité au moins de la dalle, et éventuellement des lampes de rétro éclairage. L'intégrité est considérée comme conservée tant que les dégradations subies par un écran 10 ne permettent pas la libération des éléments polluants. Dans cet esprit, on peut par exemple envisager que la dalle 11 soit éventuellement rayée.

L'avantage de conserver l'intégrité est que les dispositifs d'aspiration des polluants peuvent être utilisés à titre de précaution seulement, face à un accident par exemple, et non à chaque démantèlement de chaque écran 10 comme dans l'art antérieur.

### Procédé

On peut prévoir une étape préalable de préparation de l'écran 10 consistant à retirer l'éventuel pied de l'écran, retirer d'éventuels câbles ou des éléments esthétiques (autocollants, etc.).

On prévoit une étape 100 consistant à disposer un écran 10 unitaire sur un dispositif de maintien, de préférence la dalle apparente 12 vers le haut, c'est-à-dire directement accessible à un opérateur ou un robot. Le dispositif de maintien 20 a pour fonction de maintenir l'écran 10 quelles que soient les opérations à réaliser sur l'écran. En particulier il comprend des brides 23 capables de supporter des tensions mécaniques. De ce fait, l'écran 10 et le dispositif de maintien 20 deviennent solidaires pour la déconstruction de l'écran après bridage 110.

Le dispositif de maintien 20 comprend au moins deux brides 23A, 23B, 23C, 23D, chaque bride se prenant de préférence sur un coin respectif de l'écran. Pour chaque coin, il suffit de serrer l'écran 10 par exemple par-dessus (face avant de l'écran), par-dessous (face arrière de l'écran) et par les deux cotés (faces latérales de l'écran) du coin pour maintenir celui-ci. L'écran 10 est dans ce cas maintenu immobile avec au moins deux brides disposées sur deux coins opposés (au sens de la diagonale de l'écran).

En fonctionnement, pour un meilleur maintien de l'écran, on peut brider trois des quatre coins de l'écran. De ce fait, on peut exercer des actions de déformation plastique sur le quatrième coin (non-bridé) sans risquer d'abimer la bride.

On prévoit une étape 140 de détermination des dimensions et de la position de la dalle apparente 12. Ce qui permet de définir les droites (en trois dimensions dans un repère donné) qui correspondent chacune à l'intersection entre les bords intérieurs de l'enveloppe 14 et le plan de la dalle, de sorte à pouvoir correctement positionner les couteaux, dans une étape ultérieure.

A cet effet, une possibilité est offerte par le dispositif de maintien 20 lui-même : par exemple, l'écartement mesuré des brides qui tiennent l'écran 10 renseigne sur la hauteur ou la largeur externe de l'écran. Ce qui permet de localiser grossièrement les coins de l'écran. On peut aussi en outre venir positionner une caméra 50 au-dessus de l'un des coins.

### Profilométrie laser

Une autre possibilité est offerte par profilométrie laser 150 de l'écran.

La profilométrie laser consiste à obtenir la topographie (tridimensionnelle) d'une partie au moins de l'écran. Un laser projette un faisceau plan dont il résulte un trait de lumière sur une zone de l'écran. Le laser est incliné d'un angle donné, par exemple de 30° à 45°, par rapport à l'axe optique d'une caméra (éventuellement la même caméra 50) qui scrute une zone où le trait laser est projeté et réfléchi en direction de la caméra, de manière à imager les déformations du trait dues au relief, c'est-à-dire à la géométrie de l'écran 10 (enveloppe, boutons, etc.). De préférence, l'axe optique de la caméra ou le plan laser est orthogonal à la dalle.

Le mouvement de la caméra est solidaire du mouvement du laser, par exemple en étant portés tous deux par un bras robotisé (non illustré). Ce bras permet de produire un mouvement de translation (balayage) de l'ensemble caméra-laser notamment parallèlement à la dalle.

L'observation par la caméra du trait laser déformé permet, grâce à une calibration préalable du système caméra-laser et la mise en oeuvre d'un algorithme de traitement d'image bien connu du domaine, de connaître les coordonnées en 3D dans un repère défini (par exemple celui du robot) de chaque point du relief de l'écran ayant été balayé par l'ensemble caméra-laser.

Avantageusement, il n'est pas nécessaire de recréer une représentation complète du relief de l'écran, mais seulement de connaitre au minimum les coordonnées de certains points caractéristiques.

On peut balayer (automatiquement) le trait laser sur les quatre côtés de l'écran, de sorte à déterminer les points caractéristiques correspondant aux points de transition entre la dalle 11 et l'enveloppe 14 de l'écran, c'est-à-dire de sorte à définir le contour (périmètre) de la dalle apparente 12.

Cette étape de profilométrie laser 150 permet de situer la surface de la dalle dans l'espace par rapport à un repère donné et également de vérifier l'état de planéité et de dégradation éventuelle de la surface de la dalle 11, et d'émettre une alarme ou de retirer un écran 10 du circuit de déconstruction le cas échéant.

### Fragilisation

Pour la déformation plastique 120 du châssis, d'importants efforts mécaniques sont exercés sur celui-ci. Or les contraintes se concentrent principalement sur les coins du châssis. On peut donc prévoir une étape 130 consistant à fragiliser le châssis 13, en particulier les coins de celui-ci.

L'étape de fragilisation permet de diminuer la résistance mécanique à la déformation plastique du châssis, c'est à dire du ou des matériau (s) le composant ou de la jonction entre ces matériaux dans un coin du châssis. Elle permet donc de diminuer les efforts mécaniques nécessaires à la déformation plastique du châssis 13 - donc à l'ouverture de l'écran 10 - et permet de favoriser une éventuelle casse du châssis 13 sur les zones fragilisées.

Cette fragilisation 130 peut être réalisée en retirant de la matière, en modifiant la forme ou les propriétés physiques du châssis. Plusieurs solutions sont possibles.
- par action mécanique :
   ∘ on peut prévoir un usinage du châssis, en particulier des coins, à l'aide d'un outil abrasif (meule, fraise, perceuse ...). On peut aussi prévoir une découpe partielle du châssis, en particulier des coins, à l'aide d'un outil de découpe (scie circulaire, outil tranchant,...)
- Par action thermique :
   o On peut prévoir la cryogénisation du châssis 13 pour le rendre plus cassant, ou
   o Le chauffage du châssis 13 pour diminuer sa résistance mécanique.

On peut prévoir de percer les coins du châssis 13 recouvrant la dalle (figure 2B), sans que la dalle 11 ne soit abimée. Le perçage peut être sur tout ou partie de l'épaisseur du châssis 13 recouvrant la dalle.

On peut prévoir que l'étape de fragilisation 130 précède l'étape de déformation plastique 120.

On peut prévoir que l'étape de fragilisation 130 et l'étape de déformation plastique 120 soient simultanées, y compris par exemple grâce à la forme d'un outil 30, décrit ultérieurement.

L'étape de fragilisation 130 permet de déformer, fendre, rompre, fissurer, ou casser le châssis.

Les efforts mécaniques à appliquer (force et/ou couple) pour la déformation plastique du châssis servent à libérer la dalle 11 du châssis 13 qui la maintient. Il est donc possible de ne fragiliser le châssis 13 que sur la partie de celui-ci recouvrant la dalle 11 (en face avant de l'écran), en particulier dans les coins.

Pour la déformation plastique du châssis, les efforts mécaniques sont appliqués par un dispositif de déformation plastique.

### Dispositif de déformation plastique

Le dispositif de déformation plastique comprend un couteau 30 relié à un moyen 40 de transmission d'un effort, par exemple un vérin, éventuellement rotatif.

Par couteau, également appelé coin, on entend un instrument ou pièce mécanique à face oblique, de forme globalement prismatique, dont deux faces principales, en l'espèce un bord d'attaque 31, ou arête, se coupent à angle aigu. A la différence des outils de découpe qui nécessitent d'être aiguisés, le couteau 30 est un outil de concentration d'efforts. En outre, la mise en oeuvre du couteau 30 vise à déformer le châssis, éventuellement jusqu'à la rupture de celui-ci. Elle se distingue donc non seulement des techniques de découpe mais en outre du degré de précision que celles-ci nécessitent.

La forme du couteau 30 (figures 4A, 4A', 4B, 4B', 4C, 4C') permet de concentrer les contraintes transmises par le vérin sur le bord d'attaque 31, qui permet de concentrer les efforts mécaniques. De préférence, la forme du bord d'attaque 31 est rectiligne et sensiblement perpendiculaire au plan de la dalle ou présente un angle aigu compris entre 45 et 90° par rapport au plan de la dalle (figure 4A', 4C').

Dans un mode de réalisation non illustré, le couteau 30 comprend sur toute sa longueur une gorge rectiligne s'étendant selon un axe d'élongation parallèle au plan de l'écran et du châssis, c'est-à-dire orthogonal à la direction d'avancement du couteau, de sorte à ce que le châssis puisse être inséré dans ladite gorge et venir en butée contre les rebords de celle-ci lors du mouvement de poussée du couteau, ce qui permet de contraindre les déformations élastiques ou plastiques du châssis.

Le bord d'attaque 31 peut être configuré pour passer entre la dalle 11 et le châssis 13 (figure 4B, 4B' notamment). Il permet par exemple de se mettre en contact avec le châssis 13 lors du positionnement initial (voir ci-après), et rester en contact avec le châssis 13 lors de l'application des efforts. Il permet d'exercer une fonction d'écartement, de déformation du châssis 13 par rapport à la dalle 11.

Le bord d'attaque 31 peut être, en combinaison (figure 4A', 4C') ou alternativement, configuré pour passer entre deux côtés adjacents du châssis, c'est-à-dire pour concentrer les efforts mécaniques dans un coin de celui-ci.

Le bord d'attaque 31 peut posséder un angle d'ouverture faible (inférieur à 45°) et être prolongé par une partie plus épaisse (dont l'angle d'ouverture est plus grand. Cette forme permet un soulèvement du châssis 13 (lors de l'application d'un effort mécanique parallèle au plan de la dalle) et un blocage du châssis 13 sur le couteau, permettant une meilleure poussée lors des mouvements de celui-ci. L'angle d'attaque 31 peut être variable, passant par exemple de 25° sur la ligne d'attaque 31 à 50° au bout de quelques millimètres. La partie en contact avec la dalle 11 est plane, de manière à glisser plus facilement sur la dalle, sans engendrer de coincement ni porter atteinte à l'intégrité de la dalle.

Le couteau 30 peut présenter plusieurs formes :
- une surface utile plane, pratique lors de l'écartement des parties planes du châssis (figure 4B, 4B'),
- une surface utile avec un angle vif (figure 4A', 4C') ou en forme courbe ou arrondies (non représentée), pratique lors de l'écartement des coins du châssis,
- une surface avec plusieurs géométries (plane et / ou angle vif et / ou courbe ...), pour se prendre en n'importe quel endroit du châssis 13 (forme non représentée).

Selon la forme du couteau 30, l'étape de fragilisation 130 et l'étape de déformation plastique 120 peuvent être mises en oeuvre non seulement simultanément, mais en outre avec un seul outil, en l'espèce le dispositif de déformation plastique comprenant le couteau 30. Par exemple, comme illustré sur la figure 4C', le bord d'attaque 31 non parallèle au plan de la dalle permet de fragiliser le châssis en concentrant les efforts. Les deux faces principales, c'est-à-dire les flancs de part et d'autre de ce bord d'attaque 31 permettent de déformer plastiquement le châssis lors du mouvement relatif entre le couteau 30 et le châssis.

### Position initiale

Avant l'application d'efforts mécaniques nécessaires à la déformation plastique de l'écran, le dispositif de déformation plastique est mis dans une position initiale, manuellement et/ou automatiquement, par un mouvement relatif entre celui-ci et l'écran 10 (l'écran 10 étant de préférence maintenu).

De préférence, dans la position initiale, le dispositif de déformation plastique est au contact du châssis 13 ou de l'enveloppe 14 de l'écran.

### Déformation plastique

Une fois mis en position initiale, le dispositif de déformation plastique est mis en mouvement relatif par rapport à l'écran 10 de manière à exercer un effort mécanique (force et/ou couple) sur le châssis 13 pour le déformer (figure 5A à 5D).

Le mouvement relatif peut être mis en oeuvre selon au moins l'une des trajectoires suivantes : une trajectoire rectiligne parallèle au plan de la dalle (figure 6A), une trajectoire rectiligne non parallèle au plan de la dalle (figure 6B), une trajectoire courbe (figure 6C) ou une combinaison de ces mouvements (figure 6D).

Une trajectoire courbe permet par exemple de soulever la partie du châssis 13 recouvrant la face avant de la dalle 11 dans un mouvement de rotation du couteau 30 par rapport à un axe de rotation parallèle au côté de l'écran 10 sur lequel la déformation plastique est mise en oeuvre (figure 7).

La déformation plastique du châssis 13 permet de déformer le châssis donc de libérer la dalle 11 de l'écran. La déformation est relative, voire proportionnelle à l'effort appliqué par le couteau 30 relié à un moyen 40 de transmission d'effort. On peut prévoir que la déformation plastique aille jusqu'à la rupture mécanique du châssis.

La déformation plastique n'est pas une découpe du châssis. Avantageusement le couteau 30, même en métal, n'a pas besoin d'être particulièrement aiguisé. Et par rapport aux solutions de découpe qui impliquent une précision, une maitrise particulière, la présente solution est plus facile à mettre en oeuvre et moins coûteuse puisque le couteau 30 n'est pas un consommable comme l'est une lame de scie par exemple.

On note que lors de la déformation, un ou plusieurs couteaux (identiques entre eux ou non) peuvent être utilisés sur un même écran, simultanément ou séquentiellement. Les mouvements relatifs de chaque couteau 30 peuvent être indépendants : chaque couteau 30 peut avoir un mouvement similaire ou différent d'un autre.

Typiquement, après les mesures des dimensions et de la position de l'écran 10 par profilométrie laser 150, un algorithme de calcul détermine les trajectoires (le déplacement) de chaque couteau 30 (direction, sens, angle de rotation, point de départ et point d'arrivée du déplacement du couteau par l'intermédiaire du vérin 40).

Conformément aux trajectoires déterminées, un robot manipule ensuite le ou les couteaux, ce qui a pour effet d'ouvrir le châssis 13 de l'écran 10 par déformation plastique du châssis.

Par exemple, le couteau 30 effectue une translation de quelques centimètres dans le plan de la dalle, puis une rotation de 90° autour de l'axe parallèle au bord de l'écran 10 sur lequel le couteau 30 est en train d'effectuer la déformation, de manière à relever le bord, qui n'est donc plus au-dessus de la dalle.

La même opération peut être effectuée sur toute la longueur du châssis, afin que tout un coté du châssis 13 soit totalement ouvert. La même opération peut être effectuée sur chaque côté du châssis.

Le système de bride du dispositif de maintien 20 peut être appliqué en tout point qui n'est pas sur la trajectoire du couteau.

### Contrôle

On peut prévoir au moins une caméra (par exemple la caméra 50) pour visualiser et/ou contrôler sur le pupitre d'un opérateur le déroulement de l'application des efforts de déformation plastique. L'opérateur peut alors valider l'étape de déformation plastique ou invalider celle-ci, par exemple par un bouton poussoir.

En cas de validation, c'est-à-dire lorsque le châssis 13 a été assez ouvert pour pouvoir retirer la dalle, la dalle 11 peut alors être retirée 160 du châssis.

En cas d'invalidation, une nouvelle séquence de déformation peut être appliquée, en modifiant par exemple les paramètres d'effort, ou la longueur de course du couteau.

### Dispositif de maintien

Le dispositif de maintien 20 comprend au moins une bride 23.

La bride 23 se prend sur un coté de l'écran, en restant de préférence le plus loin possible de la dalle 11 apparente (figure 8). Elle peut aussi se prendre derrière et / ou devant, tant qu'elle ne gêne pas l'exécution du procédé.

La bride 23 peut être fixée sur un support immobile (une table par exemple) et / ou sur un système mobile apte à se déplacer (par exemple un robot).

Dans le cas où la bride 23, et donc l'écran 10 qui y est maintenu, est montée sur un système mobile, la position de la bride dans l'espace est toujours connue. De ce fait, la position de l'écran 10 dans l'espace est également connue.

Pour la bride, on peut prévoir un système de serrage mécanique, un système de ventouses, un système à aimantation, un système à base de matière collante, ou une combinaison de ces possibilités.

Dans un mode de réalisation (figure 11), le dispositif de maintien 20 comprend un ensemble de platines 24 (percées à chaque extrémité) et de vis, chaque ensemble de platine et vis associées faisant office de bride.

L'écran 10 est maintenu par deux ou trois platines 24 vissées chacune à un coin de l'écran 10 sur une table spéciale, du type table d'usinage (c'est-à-dire avec des encoches mobiles spéciales pour mettre et serrer les vis, de manière à ce qu'elles soient ensuite immobiles grâce au serrage) en de multiples points (figure 11).

Les dimensions des platines sont choisies de préférence de sorte que celles-ci appuient sur l'écran 10 sans recouvrir la dalle apparente 12 et de préférence sans recouvrir également la dalle 11 cachée sous l'enveloppe.

De préférence, les vis traversant chaque platine sont en contact avec l'écran.

Dans un mode de réalisation (figure 3), l'écran 10 est maintenu par un système de bridage (éventuellement automatique).

Un mode de réalisation du système de bridage est illustré figure 9, le maintien d'un écran 10 dans celui-ci étant illustré figure 3.

Le système de bridage comprend :
- un support 21, pouvant être monté sur un outil mobile (par exemple un robot),
- un ensemble de branches 22A, 22B, 22C, 22D indépendantes les unes des autres et montées sur le support 21, typiquement trois ou quatre branches. De préférence, chaque branche est montée rotative par rapport au support, selon un axe de rotation perpendiculaire au plan du support. De préférence, chaque branche est télescopique afin de pouvoir modifier sa longueur (figure 10),
- une bride 23A, 23B, 23C, 23D positionnée à l'extrémité de chaque branche. De préférence, afin de pouvoir l'orienter, chaque bride est montée rotative par rapport à la branche qui la supporte, selon un axe de rotation perpendiculaire au plan du support. Chaque bride comprend deux platines 24 mobiles l'une par rapport à l'autre grâce à deux vis. Le serrage de la bride se fait par exemple grâce à un mouvement relatif rectiligne des deux platines entre elles.

On peut prévoir que chaque bride 23 (ensemble platine + vis) est ajustable en hauteur par rapport à la branche respective 22 qui la supporte, au moyen par exemple d'une liaison hélicoïdale entre la bride 23 et la branche 22, d'une liaison pivot glissant blocable en translation au moyen d'une goupille de blocage en translation de la bride 23 par rapport à la branche 22 qui la supporte. Cette dernière caractéristique permet au dispositif de bridage d'être apte à recevoir et brider tout type d'écran, peu importe sa longueur, largeur, ou profondeur.

Pour maintenir un écran 10 avec un tel dispositif de maintien, on prévoit sur un bras donné :
- Le bras est tout d'abord écarté, par exemple en étirant celui-ci au maximum,
- L'écran 10 est positionné sur le support, dalle 11 vers le haut,
- Le bras subit une rotation pour être parallèle à une diagonale de l'écran,
- Le bras se rétracte, de manière à ce que les vis des brides viennent s'appuyer sur un coin, grâce à une rotation de la bride,
- La bride est serrée, ce qui bloque l'écran 10 par le coin.

Un tel dispositif de maintien 20 permet de s'adapter à toutes les tailles d'écrans.

Une fois l'écran 10 bridé, l'étape de profilométrie laser 150 peut par exemple être mise en oeuvre.

### Retrait de la dalle

Une fois la déformation plastique effectuée, la dalle 11 n'est plus maintenue par le châssis. La bride peut être retirée.

L'opération de retrait 160 peut être effectuée par un opérateur et/ou un système mobile automatisé (robot).

Les seuls liens restants entre la dalle 11 et le reste de l'écran 10 sont généralement des cartes électroniques souples et / ou des câbles. Ces diverses liaisons peuvent être coupées ou cassées, y compris lors du retrait de la dalle, grâce à un mouvement assez rapide et / ou avec assez de force.

Lors de cette action, pas ou peu d'efforts sont appliqués sur les éléments placés derrière la dalle 11 : filtres et diffuseurs, éventuelles lampes de rétro-éclairages, cartes électroniques, etc. ce qui permet de conserver leur intégrité.

La dalle 11 peut être retirée du châssis 13 de plusieurs manières :
- la dalle 11 est tirée selon une trajectoire comprenant un mouvement initial dans un sens sensiblement perpendiculaire au plan du châssis 13 (avant déformation), par exemple par des ventouses,
- la dalle 11 peut être retirée en glissant le long de l'écran 10 ; à l'image d'une feuille retirée d'une enveloppe,
- la dalle 11 peut être soulevée par levier, grâce à un outil de levier tel que tournevis, spatule, etc. Une fois soulevée, la dalle 11 peut être manipulée manuellement ou par un système automatisé avec un outil de préhension non-agressif pour la dalle 11 : ventouse, pince, effet venturi, ...
- l'écran peut être retourné pour retirer la dalle 11 par gravité.

Par exemple, un opérateur place un outil plat (de type tournevis) entre la dalle 11 et le châssis 13 déformé. L'opérateur passe la partie plate de l'outil sous la dalle 11 et, par effet de levier, soulève la dalle. Il peut alors, sans bouger le tournevis qu'il tient d'une main, attraper avec l'autre main la dalle 11 et la retirer. Le châssis 13 ayant été déformé de manière à ce que l'ouverture créée par la déformation soit plus grande que la dalle, cette opération est simple à réaliser et ne présente aucun risque particulier pour la dalle, l'opérateur ou les autres éléments de l'écran.

La dalle 11 ayant été retirée, l'opérateur peut, de la même manière, enlever les filtres et diffuseurs placés sous la dalle.

Une fois la dalle 11 retirée, le reste de l'écran 10 peut faire l'objet d'un autre traitement de déconstruction. En particulier, l'écran 10 peut subir un procédé de retrait des lampes de rétro-éclairage, objet d'une autre demande de la Demanderesse.

## Revendications

1. Procédé de déconstruction au moins partielle d'un écran (10) plat de visualisation, l'écran (10) comprenant :
• une dalle (11), sensiblement plane, comprenant quatre bords latéraux et une partie apparente (12) sur une face avant de l'écran (10), destinée à la visualisation d'images,
• un châssis (13), sertissant la dalle (11) en recouvrant partiellement au moins la face avant et deux bords latéraux,
le procédé comprenant des étapes consistant à :
• disposer (100) un tel écran (10) unitaire sur un dispositif de maintien (20), et
• brider (110) l'écran (10) unitaire sur le dispositif de maintien (20),
**caractérisé en ce qu'**il comprend en outre une étape consistant à :
• effectuer une déformation plastique (120) du châssis (13), tout en maintenant l'intégrité de la dalle (11), par un mouvement de poussée d'un dispositif de déformation plastique mis en mouvement relatif par rapport à l'écran (10) de manière à exercer un effort mécanique sur le châssis (13) pour le déformer selon au moins l'une des trajectoires suivantes : une trajectoire rectiligne parallèle au plan de la dalle (11), une trajectoire rectiligne non parallèle au plan de la dalle (11), une trajectoire courbe, ou une combinaison de ces mouvements.

2. Procédé selon la revendication 1, comprenant en outre une étape de fragilisation (130) du châssis (13) par action mécanique et/ou thermique sur le châssis (13).

3. Procédé selon la revendication 2, dans lequel l'étape de fragilisation (130) n'est mise en oeuvre que sur tout ou partie de la partie du châssis (13) recouvrant partiellement la face avant de l'écran (10).

4. Procédé selon l'une quelconque des revendications précédentes, dans lequel au moins deux des quatre coins de l'écran (10) sont bridés, la déformation plastique (120) étant effectuée sur un coin non bridé.

5. Procédé selon l'une quelconque des revendications précédentes, comprenant en outre une étape (140) de détermination des dimensions et de la position dans l'espace de la dalle apparente (12).

6. Procédé selon l'une quelconque des revendications précédentes, comprenant en outre une étape (150) de profilométrie laser consistant à obtenir la topographie tridimensionnelle d'une partie au moins de l'écran (10).

7. Procédé selon l'une quelconque des revendications précédentes, comprenant en outre une étape (160) consistant à retirer la dalle (11) du châssis (13).

8. Procédé selon l'une quelconque des revendications précédentes, **caractérisé en ce que** ledit dispositif de maintien (20) d'un écran (10) plat de visualisation pour la déconstruction au moins partielle de celui-ci, comprend :
un système de bridage comprenant :
• un support (21), sur lequel un tel écran (10) est susceptible d'être positionné,
• un ensemble de branches (22A, 22B, 22C, 22D) indépendantes montées sur le support (21),
• une bride (23A, 23B, 23C, 23D) positionnée à l'extrémité de chaque branche.

9. Procédé selon la revendication 8, **caractérisé en ce que** chaque bride (23A, 23B, 23C, 23D) est montée rotative par rapport à la branche (22A, 22B, 22C, 22D) qui la supporte, selon un axe de rotation perpendiculaire au plan du support (21) ; et/ou chaque branche (22A, 22B, 22C, 22D) est montée rotative par rapport au support (21), selon un axe de rotation perpendiculaire au plan du support (21).

10. Procédé selon l'une quelconque des revendications 8 ou 9, **caractérisé en ce que** chaque branche (22A, 22B, 22C, 22D) est télescopique.

11. Système pour la déconstruction au moins partielle d'un écran (10) plat de visualisation, le système comprenant
- un dispositif de maintien (20) d'un écran (10) plat de visualisation pour la déconstruction au moins partielle de celui-ci, comprenant :
un système de bridage comprenant :
• un support (21), sur lequel un tel écran (10) est susceptible d'être positionné,
• un ensemble de branches (22A, 22B, 22C, 22D) indépendantes montées sur le support (21),
• une bride (23A, 23B, 23C, 23D) positionnée à l'extrémité de chaque branche,
- éventuellement un écran (10) positionné dans le dispositif de maintien (20), et
- un dispositif de déformation plastique susceptible d'être mis en mouvement relatif par rapport à l'écran (10) de manière à exercer un effort mécanique sur le châssis (13) pour le déformer selon au moins l'une des trajectoires suivantes : une trajectoire rectiligne parallèle au plan de la dalle (11), une trajectoire rectiligne non parallèle au plan de la dalle (11), une trajectoire courbe, ou une combinaison de ces mouvements.

12. Système selon la revendication 11, dans lequel chaque bride (23A, 23B, 23C, 23D) dudit dispositif de maintien (20) est montée rotative par rapport à la branche (22A, 22B, 22C, 22D) qui la supporte, selon un axe de rotation perpendiculaire au plan du support (21) ; et/ou chaque branche (22A, 22B, 22C, 22D) est montée rotative par rapport au support (21), selon un axe de rotation perpendiculaire au plan du support (21).

13. Système selon la revendication 12, dans lequel chaque branche (22A, 22B, 22C, 22D) dudit dispositif de maintien (20) est télescopique.

14. Système selon l'une quelconque des revendications 11 à 13, dans lequel le dispositif de déformation plastique comprend
- un outil de concentration d'efforts (30) et
- un moyen (40) éventuellement rotatif de transmission d'un effort, relié à l'outil de concentration d'efforts, l'outil de concentration d'efforts (30) comprenant une forme permettant de concentrer les contraintes à appliquer au châssis (13).

15. Système selon la revendication 14 dans lequel l'outil de concentration d'efforts (30) présente un bord d'attaque (31) configuré pour passer entre la dalle (11) et le châssis (13).

16. Système selon l'une quelconque des revendications 14 ou 15 dans lequel l'outil de concentration d'efforts (30) présente un bord d'attaque (31) possédant un angle d'ouverture variable sur la profondeur dudit outil (30).

17. Système selon l'une quelconque des revendications 14 à 16, comprenant en outre une caméra (50) pour visualiser et/ou contrôler sur le pupitre d'un opérateur le déroulement de l'application des efforts de déformation plastique.

## Patentansprüche

1. Verfahren zur mindestens teilweisen Zerlegung eines flachen Anzeigebildschirms (10), wobei der Bildschirm (10) Folgendes umfasst:
- eine Trägerplatte (11), die im Wesentlichen flach ist, die vier Seitenränder und einen sichtbaren Teil (12) auf einer Vorderseite des Bildschirms (10) umfasst, der zur Anzeige von Bildern bestimmt ist,
- ein Chassis (13), das die Trägerplatte (11) einfasst, indem es teilweise mindestens die Vorderseite und zwei Seitenränder abdeckt,
wobei das Verfahren Schritte umfasst, die aus Folgendem bestehen:
- Anordnen (100) eines solchen einzelnen Bildschirms (10) auf einer Haltevorrichtung (20), und
- Verflanschen (110) des einzelnen Bildschirms (10) auf der Haltevorrichtung (20),
**dadurch gekennzeichnet, dass** es außerdem einen Schritt umfasst, der aus Folgendem besteht:
- Ausführen einer plastischen Verformung (120) des Chassis (13), während die Unversehrtheit der Trägerplatte (11) erhalten wird, durch eine Schubbewegung einer Vorrichtung zum plastischen Verformen, die in Bezug zu dem Bildschirm (10) derart in relative Bewegung gesetzt wird, dass eine mechanische Kraft auf das Chassis (13) ausgeübt wird, um es gemäß mindestens einer der folgenden Bahnen zu verformen: eine geradlinige Bahn, die zu der Ebene der Trägerplatte (11) parallel ist, eine geradlinige Bahn, die zu der Ebene der Trägerplatte (11) nicht parallel ist, eine gewölbte Bahn oder eine Kombination dieser Bewegungen.

2. Verfahren nach Anspruch 1, das außerdem einen Schritt des Fragilisierens (130) des Chassis (13) durch mechanische und/oder Wärmeeinwirkung auf das Chassis (13) umfasst.

3. Verfahren nach Anspruch 2, wobei der Schritt des Fragilisierens (130) nur auf einem Teil oder dem ganzen Chassis (13), das die Vorderseite des Bildschirms (10) teilweise abdeckt, umgesetzt wird.

4. Verfahren nach einem der vorhergehenden Ansprüche, wobei mindestens zwei der vier Ecken des Bildschirms (10) verflanscht sind, wobei die plastische Verformung (120) auf einer nicht verflanschten Ecke ausgeführt wird.

5. Verfahren nach einem der vorhergehenden Ansprüche, das außerdem einen Schritt (140) des Bestimmens der Maße und der räumlichen Position der sichtbaren Trägerplatte (12) umfasst.

6. Verfahren nach einem der vorhergehenden Ansprüche, das außerdem einen Schritt (150) der Laserprofilometrie umfasst, der darin besteht, die dreidimensionale Topographie mindestens eines Teils des Bildschirms (10) zu erhalten.

7. Verfahren nach einem der vorhergehenden Ansprüche, das außerdem einen Schritt (160) umfasst, der darin besteht, die Trägerplatte (11) von dem Chassis (13) zu entfernen.

8. Verfahren nach einem der vorhergehenden Ansprüche, **dadurch gekennzeichnet, dass** die Haltevorrichtung (20) eines flachen Anzeigebildschirms (10) für dessen mindestens teilweise Zerlegung Folgendes umfasst:
ein Verflanschungssystem, das Folgendes umfasst:
- einen Träger (21), auf dem ein solcher Bildschirm (10) positioniert werden kann,
- eine Einheit unabhängiger Schenkel (22A, 22B, 22C, 22D), die auf dem Träger (21) installiert ist,
- einen Flansch (23A, 23B, 23C, 23D), der an dem Ende jedes Schenkels positioniert ist.

9. Verfahren nach Anspruch 8, **dadurch gekennzeichnet, dass** jeder Flansch (23A, 23B, 23C, 23D) in Bezug zu dem Schenkel (22A, 22B, 22C, 22D), der ihn trägt, gemäß einer Rotationsachse, die zu der Ebene des Trägers (21) senkrecht ist, drehend installiert ist; und/oder jeder Schenkel (22A, 22B, 22C, 22D) in Bezug zu dem Träger (21) gemäß einer Rotationsachse senkrecht zu der Ebene des Trägers (21) drehend installiert ist.

10. Verfahren nach einem der Ansprüche 8 oder 9, **dadurch gekennzeichnet, dass** jeder Schenkel (22A, 22B, 22C, 22D) teleskopisch ist.

11. System zur mindestens teilweisen Zerlegung eines flachen Anzeigebildschirms (10), wobei das System Folgendes umfasst
- eine Haltevorrichtung (20) eines flachen Anzeigebildschirms (10) für dessen mindestens teilweise Zerlegung, umfassend:
ein Verflanschungssystem, das Folgendes umfasst:
-- einen Träger (21), auf dem ein solcher Bildschirm (10) positioniert werden kann, und
-- eine Einheit unabhängiger Schenkel (22A, 22B, 22C, 22D), die auf dem Träger (21) installiert ist,
-- einen Flansch (23A, 23B, 23C, 23D), der an dem Ende jedes Schenkels positioniert ist,
- eventuell einen Bildschirm (10), der in der Haltevorrichtung (20) positioniert ist, und
- eine Vorrichtung zum plastischen Verformen, die in Bezug zu dem Bildschirm (10) derart in relative Bewegung gesetzt werden kann, dass eine mechanische Kraft auf das Chassis (13) ausgeübt wird, um es gemäß mindestens einer der folgenden Bahnen zu verformen: eine geradlinige Bahn, die zu der Ebene der Trägerplatte (11) parallel ist, eine geradlinige Bahn, die zu der Ebene der Trägerplatte (11) nicht parallel ist, eine gewölbte Bahn oder eine Kombination dieser Bewegungen.

12. System nach Anspruch 11, wobei jeder Flansch (23A, 23B, 23C, 23D) der Haltevorrichtung (20) in Bezug zu dem Schenkel (22A, 22B, 22C, 22D), der ihn trägt, gemäß einer Rotationsachse senkrecht zu der Ebene des Trägers (21) drehend installiert ist; und/oder jeder Schenkel (22A, 22B, 22C, 22D) in Bezug zu dem Träger (21) gemäß einer Rotationsachse senkrecht zu der Ebene des Trägers (21) drehend installiert ist.

13. System nach Anspruch 12, wobei jeder Schenkel (22A, 22B, 22C, 22D) der Haltevorrichtung (20) teleskopisch ist.

14. System nach einem der Ansprüche 11 bis 13, wobei die Vorrichtung zum plastischen Verformen Folgendes umfasst
- ein Werkzeug zum Konzentrieren von Kräften (30) und
- ein eventuell drehendes Mittel (40) zum Übertragen einer Kraft, das mit dem Werkzeug zum Konzentrieren von Kräften verbunden ist,
wobei das Werkzeug zum Konzentrieren von Kräften (30) eine Form umfasst, die es erlaubt, die Spannungen zu konzentrieren, die an das Chassis (13) anzulegen sind.

15. System nach Anspruch 14, wobei das Werkzeug zum Konzentrieren von Kräften (30) eine Angriffskante (31) aufweist, die konfiguriert ist, um zwischen der Trägerplatte (11) und dem Chassis (13) durchzugehen.

16. System nach einem der Ansprüche 14 oder 15, wobei das Werkzeug zum Konzentrieren von Kräften (30) eine Angriffskante (31) aufweist, die einen Öffnungswinkel besitzt, der auf der Tiefe des Werkzeugs (30) variabel ist.

17. System nach einem der Ansprüche 14 bis 16, das außerdem eine Kamera (50) umfasst, um auf dem Pult eines Bedieners das Ablaufen des Anlegens der Kräfte zur plastischen Verformung anzuzeigen und/oder zu steuern.

## Claims

1. Method for at least partially deconstructing a flat display screen (10), the screen (10) comprising:
- a substantially flat faceplate (11) comprising four side edges and a visible part (12) on a front face of the screen (10), being intended to display images,
- a frame (13) setting the faceplate (11) by partially covering at least the front face and two side edges,
the method comprising steps consisting of:
- disposing (100) a such single screen (10) on a holding device (20), and
- clamping (110) the single screen (10) on the device for maintaining (20),
**characterised in that** it further comprises a step consisting of:
- carrying out a plastic deformation (120) of the frame (13), while still maintaining the integrity of the faceplate (11), by a thrust movement of a plastic deformation device set into relative movement with respect to the screen (10) in such a way as to exert a mechanical force on the frame (13) in order to deform it according to at least one of the following trajectories: a straight trajectory parallel to the plane of the faceplate (11), a straight trajectory that is not parallel to the plane of the faceplate (11), a curved trajectory, or a combination of these movements.

2. Method according to claim 1, further comprising a step of weakening (130) the frame (13) via mechanical and/or thermal action on the frame (13).

3. Method according to claim 2, wherein the step of weakening (130) is implemented only on all or a portion of the frame (13) partially covering the front face of the screen (10).

4. Method as claimed in any preceding claim, wherein at least two of the four corners of the screen (10) are clamped, with the plastic deformation (120) being carried out on an unclamped corner.

5. Method as claimed in any preceding claim, further comprising a step (140) of determining dimensions and the position in space of the visible faceplate (12).

6. Method as claimed in any preceding claim, further comprising a step (150) of profilometry laser consisting in obtaining the three-dimensional topography of at least a portion of the screen (10).

7. Method as claimed in any preceding claim, further comprising a step (160) consisting in removing the faceplate (11) from the frame (13).

8. Method as claimed in any preceding claim, **characterised in that** said device for maintaining (20) a flat display screen (10) for the at least partial deconstruction of the latter, comprises:
a clamping system comprising:
- a support (21), on which such a such screen (10) is able to be positioned,
- a set of independent branches (22A, 22B, 22C, 22D) mounted on the support (21),
- a clamp (23A, 23B, 23C, 23D) positioned at the end of each branch.

9. Method according to claim 8, **characterised in that** each clamp (23A, 23B, 23C, 23D) is mounted rotatably with respect to the branch (22A, 22B, 22C, 22D) that supports it, according to an axis of rotation perpendicular to the plane of the support (21); and/or each branch (22A, 22B, 22C, 22D) is mounted rotatably with respect to the support (21), according to an axis of rotation perpendicular to the plane of the support (21).

10. Method according to any of claims 8 or 9, **characterised in that** each branch (22A, 22B, 22C, 22D) is telescopic.

11. System for at least partially deconstructing a flat display screen (10), with the system comprising
- a device for maintaining (20) a flat display screen (10) for the at least partial deconstructing of the latter, comprising:
a clamping system comprising:
- a support (21), on which such a screen (10) is able to be positioned,
- a set of independent branches (22A, 22B, 22C, 22D) mounted on the support (21),
- a clamp (23A, 23B, 23C, 23D) positioned at the end of each branch,
- possibly a screen (10) positioned in the device for maintaining (20), and
- a plastic deformation device able to be set into relative movement with respect to the screen (10) in such a way as to exert a mechanical force on the frame (13) in order to deform it according to one of the following trajectories: a straight trajectory parallel to the plane of the faceplate (11), a straight trajectory that is not parallel to the plane of the faceplate (11), a curved trajectory, or a combination of these movements.

12. System according to claim 11, wherein each clamp (23A, 23B, 23C, 23D) of said device for maintaining (20) is mounted rotatably with respect to the branch (22A, 22B, 22C, 22D) that supports it, according to an axis of rotation perpendicular to the plane of the support (21); and/or each branch (22A, 22B, 22C, 22D) is mounted rotatably with respect to the support (21), according to an axis of rotation perpendicular to the plane of the support (21).

13. System according to claim 12, wherein each branch (22A, 22B, 22C, 22D) of said device for maintaining (20) is telescopic.

14. System according to any of claims 11 to 13, wherein the plastic deformation device comprises
- a tool for concentrating forces (30) and
- a means (40) possibly rotating for the transmission of a force, connected to the tool for concentrating forces,
with the tool for concentrating forces (30) comprising a shape that makes it possible to concentrate the stresses to be applied to the frame (13).

15. System according to claim 14 wherein the tool for concentrating forces (30) has a leading edge (31) configured to pass between the faceplate (11) and the frame (13).

16. System according to any of claims 14 or 15 wherein the tool for concentrating forces (30) has a leading edge (31) having a variable opening angle on the depth of said tool (30).

17. System according to any of claims 14 to 16, further comprising a camera (50) for displaying and/or controlling on the console of an operator the unfolding of the application of the plastic deformation forces.
